# EUROPÄISCHE PATENTANMELDUNG

(11) **EP 4 064 090 A1**
(43) Veröffentlichungstag der Anmeldung: **28.09.2022**
(21) Anmeldenummer: 21164668.2
(22) Anmeldetag: 24.03.2021
(51) Int. Cl.: G06F 21/60, G06F 21/57, G06F 21/53, G06F 21/71, H04L 9/32, G06F 21/62, G06F 21/74

(54) **BEREITSTELLUNG VON ZU SCHÜTZENDEN DATEN IN EINER SICHEREN AUSFÜHRUNGSUMGEBUNG EINES DATENVERARBEITUNGSSYSTEMS**

(71) Anmelder: Siemens Aktiengesellschaft, 80333 München (DE)
(72) Erfinder: Zwanzger, Johannes, 85579 Neubiberg (DE)

(57) **Zusammenfassung**

Die Erfindung gibt ein Verfahren zur Bereitstellung von zu schützenden Daten (D) in einer sicheren Ausführungsumgebung (TEE) eines Datenverarbeitungssystems (F) an:
- Generieren (S2) eines Schlüsselpaars (K_pub/K_priv) durch einen Enklavencode (C) in der sicheren Ausführungsumgebung (TEE), wobei das Schlüsselpaar (K_pub/K_priv),
- Senden (S3) des öffentlichen Schlüssels (K_pub) an einen obfuszierten Programmcode (O), wobei der obfuszierte Programmcode (O) von der unsicheren Ausführungsumgebung (U) aufgewiesen wird,
- Verifizieren (S5) des öffentlichen Schlüssels (P_pub) durch den obfuszierten Programmcode (O) und in Abhängigkeit von Ergebnissen des Verifizierens ein Umschlüsseln erster verschlüsselten Daten (D") in zweite verschlüsselte Daten (D'), wobei die zweiten verschlüsselten Daten (D') mit dem öffentlichen Schlüssel (K_pub) verschlüsselt sind,
- Senden (S6) der zweiten verschlüsselten Daten (D') an die Enklave (E) in der sicheren Ausführungsumgebung (TEE) und
- Entschlüsseln (S7) der zweiten verschlüsselten Daten (D') in die zu schützenden Daten (D).

Außerdem gibt die Erfindung ein Datenverarbeitungssystems (F), Computerprogrammprodukt und computerlesbares Medium an.

## Beschreibung

### HINTERGRUND DER ERFINDUNG

### Gebiet der Erfindung

Die Erfindung gibt ein Verfahren zur Bereitstellung von zu schützenden Daten in einer sicheren Ausführungsumgebung eines Datenverarbeitungssystems an. Außerdem gibt die Erfindung ein Datenverarbeitungssystems, ein Computerprogrammprodukt und ein computerlesbares Medium an.

### Beschreibung des Stands der Technik

Beim Ausliefern von Code und/oder Daten auf "Fremdgeräte" ergibt sich für den Ersteller des Codes bzw. der Daten oft ein Dilemma: Einerseits müssen der Code bzw. die Daten dort vorliegen und so funktionieren, wie es ihrer Intention entspricht, um den angestrebten Anwendungsfall zu bedienen. Anderseits können darin sensitive Informationen (beispielsweise Firmen-Know-how) enthalten sein, die man vor dem Anwender bzw. einem Plattformbetreiber, insbesondere einem Cloudanbieter, lieber geheim halten möchte.

Bei dem "Fremdgerät" kann es sich prinzipiell um jede Art einer informationsverarbeitenden Anlage handeln, die der Ersteller oder Inhaber des Codes bzw. Daten nicht vollständig unter Kontrolle hat und bei der die Möglichkeit des Missbrauchs des Codes bzw. der Daten, insbesondere durch Analyse/Reverse Engineering, Modifikation, Klonen, etc., besteht; insbesondere also ein Server in der Cloud, aber auch der private PC eines Anwenders.

Es greift in diesem Fall zu kurz, den verwendeten Code bzw. die Daten einfach zu verschlüsseln und bei Bedarf mit nach üblichen Programmierstandards erstellter Software wieder zu entschlüsseln, da dann offensichtlich alle Informationen, insbesondere die Schlüssel, die zum Entschlüsseln des Codes bzw. der Daten notwendig sind, in dieser Software und damit auf dem Fremdgerät verfügbar sein müssen. In diesem Falle würde die Software und ggf. auch die von ihr ausgegebene entschlüsselte Form des Codes bzw. der Daten zum Ziel eines Angriffes.

Einer der Hauptansätze, um Software bzw. die damit behandelten Daten zu schützen, ist Obfuskation, d.h. die Transformation von Code und Daten in eine äquivalente, aber schwerer verständliche Form. Einige auf dem Markt erhältliche, automatisch ablaufende Tools erlauben es zwar, diesen Transformationsschritt mit vergleichsweise wenig Aufwand durchzuführen; dafür findet die Obfuskation naturgemäß nur auf einem sehr generellen Level - insbesondere durch 1:1-Übersetzung der Maschinencode-Instruktionen in die entsprechenden Instruktionen für eine virtuelle Maschine mit eigenem Befehlssatz - statt, was das erreichbare Schutzniveau begrenzt. Anspruchsvollere Obfuskationstechniken setzen üblicherweise auf der algorithmischen Ebene an und verändern dort auch logisch die Programmschritte. Dies setzt allerdings oft sehr aufwändige, algorithmen-individuelle Arbeitsschritte voraus. Allgemein führt Obfuskation auf einem höheren Level (d.h. "gute" Obfuskation mit hohem Schutzniveau) meist zu einem deutlich erhöhten Ressourcenaufwand hinsichtlich Speicher und Laufzeit der Software.

Die Aufgabe der Erfindung besteht darin, eine allgemein einsetzbare Lösung mit hohem Schutzniveau und kleinem Ressourcenbedarf bereitzustellen, um sensitiven Code bzw. Daten auf einem Fremdgerät ausführbar bzw. auswertbar zu machen, ohne den Code bzw. die Daten selbst offenzulegen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Bereitstellung von zu schützenden Daten in einer sicheren Ausführungsumgebung eines Datenverarbeitungssystems.

Das Verfahren weist die folgenden Schritte auf:
- Ausführen eines Enklavencodes in der sicheren Ausführungsumgebung,
- Generieren eines Schlüsselpaars durch den Enklavencode, wobei das Schlüsselpaar einen öffentlichen Schlüssel und einen privaten Schlüssel aufweist,
- Senden des öffentlichen Schlüssels an eine unsichere Ausführungsumgebung des Datenverarbeitungssystems, wobei die unsichere Ausführungsumgebung außerhalb der sicheren Ausführungsumgebung liegt,
- Senden des öffentlichen Schlüssels und Senden von ersten verschlüsselten Daten an einen obfuszierten Programmcode, wobei der obfuszierte Programmcode von der unsicheren Ausführungsumgebung aufgewiesen wird,
- Verifizieren des öffentlichen Schlüssels durch den obfuszierten Programmcode und in Abhängigkeit von Ergebnissen des Verifizierens ein Umschlüsseln der ersten verschlüsselten Daten in zweite verschlüsselte Daten, wobei die zweiten verschlüsselten Daten mit dem öffentlichen Schlüssel verschlüsselt sind,
- Senden der zweiten verschlüsselten Daten an den Enklavencode in der sicheren Ausführungsumgebung und
- Entschlüsseln der zweiten verschlüsselten Daten unter Einsatz des privaten Schlüssels in die zu schützenden Daten durch den Enklavencode in der sicheren Ausführungsumgebung.

Anschließend kann eine Verarbeitung der zu schützenden Daten in der sicheren Ausführungsumgebung durch den Enklavencode durchgeführt werden.

Ein Aspekt der Erfindung besteht darin, zu schützende Daten direkt auf einem Fremdgerät zu entschlüsseln, dort aber nur für Enklavencode in einer sicheren Ausführungsumgebung verfügbar zu machen, während ein Umschlüsseln der zu schützenden Daten in einer unsicheren Ausführungsumgebung stattfindet.

In einer weiteren Weiterbildung der Erfindung ist eine Zugriffsbeschränkung auf die sichere Ausführungsumgebung vorhanden, welche der unsicheren Ausführungsumgebung den Zugriff auf die sichere Ausführungsumgebung verweigert. Das hat den Vorteil, dass ein Angreifer keinen Zugriff auf die sichere Ausführungsumgebung und die dort vorhandenen Daten hat.

Somit wird erfindungsgemäß für den Schutz der zu schützenden Daten, insbesondere eines zu schützenden Codes, vorausgesetzt, dass auf dem Datenverarbeitungssystem, insbesondere einem Fremdgerät, eine sichere Ausführungsumgebung, eine sog. Trusted Execution Environment (TEE), vorhanden ist, die sich von einer unsicheren (d.h. vom Anwender/Plattformbetreiber kontrollierten) Ausführungsumgebung auf dem Datenverarbeitungssystem durch folgende Eigenschaften abhebt.

Durch die sichere Ausführungsumgebung kann Enklavencode, insbesondere in einer Enklave, ausgeführt werden, dessen Speicherinhalt von einer anderen Enklave oder der unsicheren Ausführungsumgebung aus nicht zugreifbar ist (weder durch andere laufende Applikationen noch durch das Betriebssystem des Datenverarbeitungssystems).

Außerdem bietet die sichere Ausführungsumgebung dem innerhalb der Enklave laufenden Enklavencode die Möglichkeit, für bestimmte Daten, insbesondere kryptographische Schlüssel, nach außen, d.h. an die unsichere Ausführungsumgebung bzw. außerhalb des Datenverarbeitungssystems zu attestieren, dass diese durch den unveränderten Enklavencode innerhalb der Enklave in der sicheren Ausführungsumgebung erzeugt wurden. Die Attestierung kann außerhalb durch Code, insbesondere den obfuszierten Programmcode, überprüft werden, welcher ohne konkrete Kenntnis des Datenverarbeitungssystems entwickelt werden kann. Der obfuszierte Programmcode kann zur Laufzeit ggf. aber Informationen über das Datenverarbeitungssystem als Input erhalten.

Es wird somit obfuszierter Programmcode zur Ausführung in der unsicheren Ausführungsumgebung eines Datenverarbeitungssystems, insbesondere Fremdgerätes, mit folgenden Eigenschaften implementiert.

Der obfuszierte Programmcode kann die Attestierung von einem durch den Enklavencode generierten öffentlichen Schlüssel, durch die im vorherigen Absatz genannten Eigenschaften, verifizieren. Es findet somit ein Verifizieren des öffentlichen Schlüssels durch den obfuszierten Programmcode statt, ob die Attestierung in sicherer Ausführungsumgebung (von vertrauenswürdiger Enklave) erstellt wurde.

Sofern die Attestierung erfolgreich war, schlüsselt obfuszierter Programmcode erste verschlüsselte Daten, insbesondere vorverschlüsselte Daten, um in zweite verschlüsselte Daten.

In einer vorteilhaften Ausführung der Erfindung geschieht dies mit einer symmetrischen Entschlüsselungsfunktion Dec_sym unter einem symmetrischen Schlüssel K_sym zusammen mit einer asymmetrischen Verschlüsselung Enc_asym vermöge D`=Enc_asym(Dec_sym(D ", K_sym), K_pub), mit D' = zweite verschlüsselte Daten, und D" = erste verschlüsselte Daten. Beachte: Dec_sym(D", K_sym)=D.

Enc_asym ist dabei in einer vorteilhaften Ausführung der Erfindung ein hybrides Verschlüsselungsverfahren, bei dem ein zum Verschlüsselungszeitpunkt zufällig erzeugter, symmetrischer Schlüssel mit K_pub verschlüsselt wird, welcher wiederum, insbesondere aus Performance- und Ressourcengründen, für die Verschlüsselung der Payload der zu schützenden Daten verwendet wird.

Aufgrund der durch den obfuszierten Programmcode angewandten Obfuskation sind die oben genannten Teilfunktionen, insbesondere die Verifikation der Attestierung, die symmetrische Entschlüsselung von den ersten verschlüsselten Daten in die zu schützenden Daten, und die hybride Verschlüsselung von den zu schützenden Daten in die zweiten verschlüsselten Daten im obfuszierten Programmcode für einen Angreifer weder analysierbar noch voneinander zu trennen. Insbesondere ist es einem Angreifer nicht möglich, aus obfuszierten Zwischenergebnissen der Teilfunktionen auf deren logisches Pendant, insbesondere auf entschlüsselte Anteile der zu schützenden Daten, zu schließen.

Ebenso wenig kann er die Verifikation der Attestierung des öffentlichen Schlüssels in dem obfuszierten Programmcode so manipulieren, dass ein nicht oder inkorrekt attestierter öffentlicher Schlüssel zur Generierung der Ausgabe der zweiten verschlüsselten Daten verwendet werden kann. Dies muss verhindert werden, denn andernfalls könnte ein Angreifer mit dem privaten Gegenstück des nicht attestierten öffentlichen Schlüssels die zweiten verschlüsselten Daten entschlüsseln.

Die genannten Schritte zur Erstellung des obfuszierten Programmcodes müssen nur einmalig pro Schlüssel K_sym erfolgen und können ohne Kenntnis des Datenverarbeitungssystems, insbesondere der Fremdgeräte, auf denen der obfuszierte Programmcode später zum Einsatz kommt, durchgeführt werden.

Insbesondere kann derselbe obfuszierte Programmcode auf verschiedenen Fremdgeräten zum Einsatz kommen. Für die Attestierung muss dazu nur ein geringfügiger Teil des obfuszierten Programmcodes auf den Enklavencode angepasst werden, insbesondere in Form einer Konstante, die einem Hash des Enklaven-codes entspricht und im Rahmen der Attestierungs-Verifikation genutzt werden kann, um die Integrität (d.h. "Unverändertheit") des Enklaven-Codes festzustellen.

Die zu schützenden Daten werden, bevor sie auf das Datenverarbeitungssystem gebracht werden, vorverschlüsselt in die ersten verschlüsselten Daten. In einer vorteilhaften Ausführung der Erfindung geschieht dies mit der symmetrischen Verschlüsselungsfunktion. Dieser Schritt muss bei gleichbleibendem symmetrischem Schlüssel K_sym nur einmalig pro Datensatz der zu schützenden Daten ausgeführt werden. Dieser Schritt kann außerdem ohne Kenntnis der Fremdgeräte, auf denen der obfuszierte Programmcode später zum Einsatz kommt, durchgeführt werden. Insbesondere kann derselbe obfuszierte Programmcode auf verschiedenen Fremdgeräten zum Einsatz kommen.

Für jedes Fremdgerät werden der obfuszierte Programmcode und die ersten verschlüsselten Daten in die unsichere Ausführungsumgebung übertragen, entweder online oder "offline", z.B. per Installationsdatenträger, welcher auch die weitere Software enthalten kann, die die von dem Enklavencode auf Basis der zu schützenden Daten errechneten Ergebnisse nutzen soll.

In einer Variante der Erfindung kann ein Senden der zweiten verschlüsselten Daten von dem obfuszierten Programmcode an die unsichere Ausführungsumgebung vor dem Senden der zweiten verschlüsselten Daten an die Enklave in der sicheren Ausführungsumgebung stattfinden.

In einer Weiterbildung der Erfindung ist das Datenverarbeitungssystem ausgebildet als:
- Server,
- Cloudserver,
- Fremdsystem,
- Computer und/oder
- mobiles informationsverarbeitendes Gerät.

In einer weiteren Weiterbildung der Erfindung ist die sichere Ausführungsumgebung als Trusted Execution Environment (TEE) ausgebildet.

In einer weiteren Weiterbildung der Erfindung ist der Enklavencode ausgebildet Zufallszahlen zu erzeugen, wobei mindestens eine der Zufallszahlen zur Generierung des asymmetrischen Schlüsselpaares herangezogen wird. Die Zufallszahlen können als echte Zufallszahlen oder als Pseudozufallszahlen ausgebildet sein, wobei die Pseudozufallszahlenerzeugung auf einem Geheimnis (Seed) basieren muss, das nur innerhalb der Enklave bekannt ist. Die Zufallszahlen sind auch bei Kenntnis des Enklavencodes nicht vorhersagbar.

In einer weiteren Weiterbildung der Erfindung sind die zweiten verschlüsselten Daten mittels eines hybriden Verschlüsselungsverfahren verschlüsselt. Sofern die Attestierung erfolgreich war, schlüsselt obfuszierter Programmcode erste verschlüsselte Daten, insbesondere vorverschlüsselte Daten, um in zweite verschlüsselte Daten.

In einer vorteilhaften Ausführung der Erfindung geschieht dies mit einer symmetrischen Entschlüsselungsfunktion Dec_sym unter einem symmetrischen Schlüssel K_sym zusammen mit einer asymmetrischen Verschlüsselung Enc_asym vermöge D'=Enc_asym(Dec_sym(D", K_sym), K_pub), mit D' = zweite verschlüsselte Daten, und D" = erste verschlüsselte Daten. Beachte: Dec_sym(D", K_sym)=D und D"=Enc_sym(D, K_Sym) mit der zu Dec_sym inversend symmetrischen Verschlüsselungsfunktion Enc_sym.

Enc_asym ist dabei in einer vorteilhaften Ausführung der Erfindung ein hybrides Verschlüsselungsverfahren, bei dem ein zum Verschlüsselungszeitpunkt zufällig erzeugter, symmetrischer Schlüssel mit K_pub verschlüsselt wird, welcher wiederum, insbesondere aus Performance- und Ressourcengründen, für die Verschlüsselung der Payload der zu schützenden Daten verwendet wird. In einer Variante dieser Ausführung wird der symmetrische Schlüssel für das hybride Verschlüsselungsverfahren nicht zufällig erzeugt, sondern in einem durch den obfuszierten Code geheim gehaltenen Verfahren deterministisch abgeleitet. Hierdurch kann die Erfindung auch genutzt werden, wenn in der unsicheren Ausführungsumgebung ein wirklich zufälliges (nicht-deterministisches) Erzeugen eines Schlüssels nicht möglich ist. In das Ableitungsverfahren können dabei die ersten verschlüsselten Daten D" oder die entschlüsselten Daten D eingehen. Dadurch wird garantiert, dass für unterschiedliche Daten D" bzw. D jeweils ein unterschiedlicher symmetrischer Schlüssel für das hybride Verschlüsselungsverfahren zum Einsatz kommt.

In einer weiteren Weiterbildung der Erfindung sind die ersten verschlüsselten Daten auf dem Datenverarbeitungssystem in der unsicheren Arbeitsumgebung gespeichert. Die ersten verschlüsselten Daten können somit einmalig und vorab auf dem Datenverarbeitungssystem abgelegt werden.

In einer weiteren Weiterbildung der Erfindung kommen anstelle der symmetrischen Ver- und Entschlüsselungsfunktionen enc_sym und dec_sym (ggf. von enc_asym und dec_asym verschiedene) asymmetrische Ver- und Entschlüsselungsfunktionen zum Einsatz. Allerdings dürfte die Komplexität asymmetrischer Verfahren im obfuszierten Programmcode zu einem erhöhten Ressourcenbedarf bei Speicher und Laufzeit führen.

In einer weiteren Weiterbildung der Erfindung werden bei dem Umschlüsseln der ersten verschlüsselten Daten zu zweiten verschlüsselten Daten obfuszierte Zwischenergebnisse erstellt. Aufgrund der durch den obfuszierten Programmcode angewandten Obfuskation sind die oben genannten Teilfunktionen, insbesondere die Verifikation der Attestierung, die symmetrische Entschlüsselung von den ersten verschlüsselten Daten in die zu schützenden Daten, und die hybride Verschlüsselung von den zu schützenden Daten in die zweiten verschlüsselten Daten im obfuszierten Programmcode für einen Angreifer weder analysierbar noch voneinander zu trennen. Insbesondere ist es einem Angreifer nicht möglich, aus obfuszierten Zwischenergebnissen der Teilfunktionen auf deren logisches Pendant, insbesondere auf entschlüsselte Anteile der zu schützenden Daten, zu schließen.

In einer weiteren Weiterbildung der Erfindung wird bei dem Verifizieren des öffentlichen Schlüssels durch den obfuszierten Programmcode geprüft, ob eine gültige Attestierung des öffentlichen Schlüssels vorliegt, wobei das Umschlüsseln der ersten verschlüsselten Daten in die zweiten verschlüsselten Daten nur bei Vorliegen einer gültigen Attestierung durchgeführt wird. Der obfuszierte Programmcode kann die Attestierung von einem durch den Enklavencode generierten öffentlichen Schlüssel, durch die im vorherigen Absatz genannten Eigenschaften, verifizieren. Es findet somit ein Verifizieren des öffentlichen Schlüssels durch den obfuszierten Programmcode statt, ob die Attestierung in sicherer Ausführungsumgebung (von vertrauenswürdiger Enklave) erstellt wurde.

Sofern die Attestierung erfolgreich war, schlüsselt obfuszierter Programmcode erste verschlüsselte Daten, insbesondere vorverschlüsselte Daten, um in zweite verschlüsselte Daten.

In einer weiteren Weiterbildung der Erfindung ist der obfuszierte Code auf dem Datenverarbeitungssystem in der unsicheren Arbeitsumgebung gespeichert. Der obfuszierte Code wird somit genau wie die ersten verschlüsselten Daten einmalig und vorab auf dem Datenverarbeitungssystem abgelegt.

In einer weiteren Weiterbildung der Erfindung sind die zu schützenden Daten als:
- Programmcode,
- interpretierbarer Code,
- Parametrisierungen für Algorithmen,
- numerische Daten und/oder
- Gewichte eines neuronalen Netzes,
ausgebildet.

Die Unterscheidung, ob es sich bei den zu schützenden Daten um Code oder Daten handelt, kann fließend betrachtet werden. Die Erfindung ist z.B. auch anwendbar, falls die sichere Ausführungsumgebung, insbesondere TEE, nicht die Ausführung von extern eingebrachtem nativem Code, also solchem, der nicht Teil des feststehenden Enklavencodes ist, unterstützt. In diesem Fall kann es sich bei den zu schützenden Daten um interpretierbaren Code, auch als Daten bezeichenbar, handeln, der innerhalb der Enklave von einem im Enklavencode enthaltenen Interpreter umgesetzt wird. Ferner können mehrere verschiedene zu schützende Datensätze D1, D2, usw. gleichzeitig mit demselben obfuszierten Programmcode genutzt werden.

In einem weiteren Anwendungsbeispiel kann es sich bei den zu schützenden Daten um Parametrierungen von Algorithmen handeln, die für deren effiziente Ausführung notwendig sind, insbesondere bei Condition-Monitoring-Systemen und für Predictive Maintenance.

In einem weiteren Anwendungsbeispiel können die zu schützenden Daten ausführbaren bzw. interpretierbaren Code umfassen, der betriebsinternes Knowhow, insbesondere Betriebsgeheimnisse, umfasst, welches durch die Ausführung oder die Interpretation in der sicheren Ausführungsumgebung, insbesondere eine Trusted Execution Environment, geschützt wird.

In einer weiteren Weiterbildung der Erfindung wird das Ausführen des Enklavencodes, wie zuvor erwähnt, in einer Enklave durchgeführt, wobei die Enklave von der sicheren Ausführungsumgebung aufgewiesen wird.

Die Erfindung umfasst außerdem ein Datenverarbeitungssystem zur Ausführung eines erfindungsgemäßen Verfahrens. Das Datenverarbeitungssystem weist die folgenden Komponenten auf:
- eine sichere Ausführungsumgebung, wobei die sichere Ausführungsumgebung ausgebildet ist:
   - einen Enklavencode auszuführen wodurch ein Schlüsselpaar generiert wird, wobei das Schlüsselpaar einen öffentlichen Schlüssel und einen privaten Schlüssel aufweist,

   - den öffentlichen Schlüssel zu senden,
- eine unsichere Arbeitsumgebung, wobei die unsichere Ausführungsumgebung außerhalb der sicheren Ausführungsumgebung liegt, wobei die unsichere Arbeitsumgebung ausgebildet ist, den öffentlichen Schlüssel zu empfangen,
- einen obfuszierten Programmcode, wobei sich der obfuszierte Programmcode innerhalb der unsicheren Ausführungsumgebung befindet,
wobei die unsichere Ausführungsumgebung ausgebildet ist, den öffentlichen Schlüssel und erste verschlüsselten Daten an den obfuszierten Programmcode zu senden,
wobei der obfuszierte Programmcode ausgebildet ist, ein Verifizieren des öffentlichen Schlüssels durchzuführen und in Abhängigkeit von Ergebnissen des Verifizierens ein Umschlüsseln der ersten verschlüsselten Daten in zweite verschlüsselte Daten durchzuführen, wobei die zweiten verschlüsselten Daten
mit dem öffentlichen Schlüssel verschlüsselt sind, wobei der obfuszierte Programmcode außerdem ausgebildet ist, die zweiten verschlüsselten Daten zu senden, und
wobei die sichere Ausführungsumgebung ausgebildet ist die zweiten verschlüsselten Daten zu empfangen und die zweiten verschlüsselten Daten durch den Enklavencode zu entschlüsseln.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Es sei angemerkt, dass es auf den ersten Blick möglich scheinen könnte, dass der obfuszierte Programmcode statt in der unsicheren Ausführungsumgebung auch direkt als Teil des Enklavencodes in der sicheren Ausführungsumgebung, insbesondere in einer Enklave laufen könnte und nach erfolgreicher Prüfung, dass der Enklavencode, welcher in diesem Fall dann den obfuszierten Programmcode enthalten würde, unverändert in der Enklave läuft, die ersten verschlüsselten Daten in die zu schützenden Daten entschlüsseln (die Notwendigkeit der Umschlüsselung in die zweiten verschlüsselten Daten entfiele). Das Problem besteht darin, dass mit dem obfuszierten Programmcode als Teil des Enklavencodes ein Reflexivitätsproblem entsteht: Sobald man in den obfuszierten Programmcode einkodiert, wie der unveränderte Enklavencode aussehen muss, insbesondere basierend auf einem Hash über den Enklavencode, der im Rahmen der Attestierung bestätigt wird, ändert sich auch der Enklavencode mit. Unabhängig von diesem prinzipiellen Problem kann es - je nach Gegebenheiten der sicheren Ausführungsumgebung - auch grundsätzlich sinnvoll sein, den obfuszierten Programmcode außerhalb der sicheren Ausführungsumgebung laufen zu lassen, insbesondere aufgrund dort vorliegender Ressourcenengpässe oder Einschränkungen an die Form des obfuszierten Programmcodes.

Die Erfindung bietet den Vorteil, dass beliebige Inhalte, insbesondere zu schützende Daten, welche auch als Code ausgebildet sein können, vorverschlüsselt auf Fremdgeräte verteilt und dort durch obfuszierten Code sicher für die Nutzung innerhalb einer sicheren Ausführungsumgebung, insbesondere einer TEE, umgeschlüsselt werden. Dabei muss das Datenverarbeitungssystem, insbesondere müssen die Fremdgeräte, nicht vorab bekannt sein.

Die Erfindung bietet den weiteren Vorteil, dass sowohl die Umschlüsselung als auch die Entscheidung, ob eine solche überhaupt erfolgen darf, in obfusziertem Code lokal auf dem Datenverarbeitungssystem, insbesondere dem Fremdgerät, passiert. Folglich ist keine Verbindung zu einer vertrauenswürdigen Remotesite notwendig, was für den Anwender Vorteile hinsichtlich der Verfügbarkeit und für den Verteiler/Ersteller der Inhalte Vorteile in der Handhabung bietet.

Die Erfindung bietet den weiteren Vorteil, dass die obfuszierte Umschlüsselung so gestaltet werden kann, dass sie für beliebige Enklaven umschlüsselt, die ein geeignetes Zertifikat vorweisen können, d.h. die Obfuskation muss dann auch für verschiedene Fremdgeräte nur einmalig vorgenommen werden.

Die Erfindung bietet den weiteren Vorteil, dass der obfuszierte Code auf beliebige vorschlüsselte Daten angewendet werden kann, d.h. auch bei mehreren (z.B. zeitlich versetzt) verteilten Inhalten muss die Obfuskation nur einmal vorgenommen werden.

Die Erfindung bietet den weiteren Vorteil, dass verglichen mit der Obfuskation des anwendungsspezifischen, in der Enklave laufenden Codes bzw. der dort verarbeiteten Daten viel individueller Aufwand entfällt, da das erfindungsgemäße Verfahren generisch anwendbar ist.

Die Erfindung bietet den weiteren Vorteil, dass es sich um eine reine Softwarelösung handelt, d.h. es ist kein zusätzliches Hardware-Dongle notwendig.

Die genannten Vorteile der Erfindung werden dadurch erreichet, dass die gemeinsame Obfuskation der Verifikation der Attestierung des öffentlichen Schlüssels und die Umschlüsselung der ersten verschlüsselten Daten in die zweiten verschlüsselten Daten in einem untrennbaren Block, dem obfuszierten Programmcode, es erlaubt, dass dieser Block auch in nicht vertrauenswürdigen unsicheren Umgebungen ausgeführt werden kann. Ein Angreifer kann, gute Obfuskationstechnik vorausgesetzt, die beiden Einzeloperationen nicht voneinander trennen und den obfuszierten Programmcode auch nicht so manipulieren, dass er gefälschte, d.h. nicht korrekt attestierte asymmetrische öffentliche Schlüssel akzeptieren würde. Somit kann sichergestellt werden, dass die sicherheitskritische Umschlüsselung der ersten verschlüsselten Daten in die zweiten verschlüsselten Daten nur für öffentliche Schlüssel erfolgt, die ausschließlich in der Enklave der sicheren Ausführungsumgebung bekannt sind.

Dadurch, dass der öffentliche Schlüssel innerhalb der sicheren Ausführungsumgebung eines Datenverarbeitungssystems, insbesondere eines individuellen Fremdgerätes, generiert wurde, die Attestierung aber mit vom konkreten Datenverarbeitungssystems unabhängigen obfuszierten Programmcode verifiziert werden kann, kann derselbe obfuszierte Programmcode für verschiedene Fremdgeräte genutzt werden. Die Umschlüsselung der ersten verschlüsselten Daten in die zweiten verschlüsselten Daten durch den obfuszierten Programmcode hängt dabei nicht von den konkreten zu schützenden Daten oder den ersten verschlüsselten Daten ab, so dass der obfuszierte Programmcode auch für verschiedene zu schützende Daten wiederverwendet werden kann.

Außerdem hängt der obfuszierte Programmcode nicht vom anwendungsspezifischen Teil des in der Enklave laufenden Enklaven-codes ab und kann daher generisch über viele Anwendungen hinweg genutzt werden.

Zusätzlich ermöglicht das erfindungsgemäße Verfahren einen im Vergleich zu einer individuellen Obfuskation vergleichsweise kostengünstigen Ansatz zum Schutz von Firmen-Know-How in zu schützenden Daten, insbesondere Code, die auf vorab unbekannten Fremdgeräten vorliegen bzw. ausgeführt werden müssen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: den Ablauf eines erfindungsgemäßen Verfahrens in einem erfindungsgemäßen Datenverarbeitungssystem.

### DETAILLIERTE BESCHREIBUNG DER ERFINDUNG

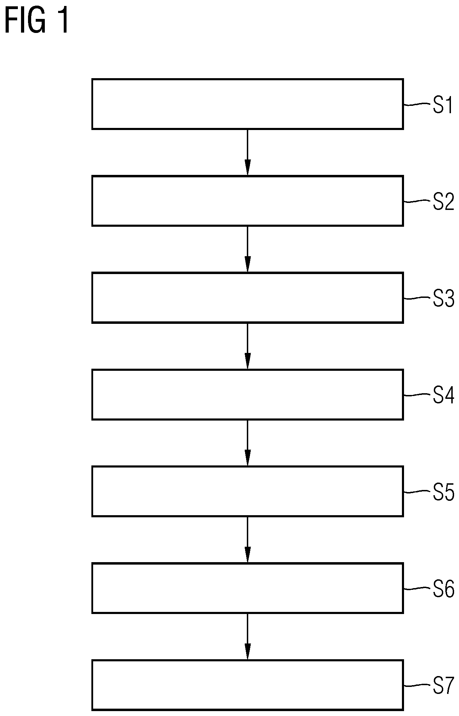

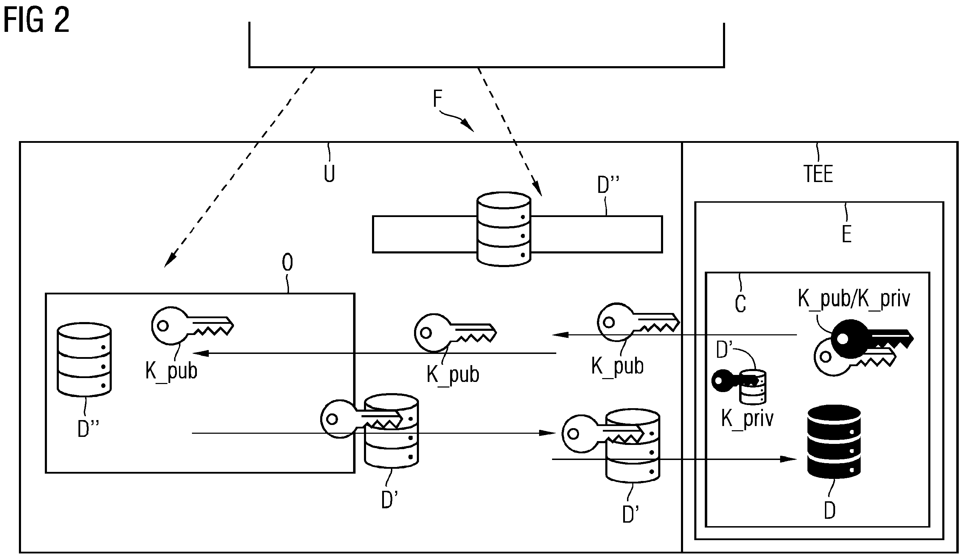

Fig. 1 zeigt ein Ablaufdiagramm des erfindungsgemäßen Verfahrens zur Bereitstellung von zu schützenden Daten D in einer sicheren Ausführungsumgebung TEE eines Datenverarbeitungssystems F und Fig. 2 zeigt den Ablauf eines erfindungsgemäßen Verfahrens anhand eines erfindungsgemäßen Datenverarbeitungssystem.

Nach Fig. weist das Verfahren die folgenden Schritte auf. Die Komponenten sind jeweils in Fig. 2 dargestellt.
- Schritt S1: Ausführen eines Enklavencodes C in der sicheren Ausführungsumgebung TEE,
- Schritt S2: Generieren S2 eines Schlüsselpaars K_pub/K_priv durch den Enklavencode C, wobei das Schlüsselpaar K_pub/K_priv einen öffentlichen Schlüssel K_pub und einen privaten Schlüssel K_priv aufweist,
- Schritt S3: Senden des öffentlichen Schlüssels K_pub an eine unsichere Ausführungsumgebung U des Datenverarbeitungssystems F, wobei die unsichere Ausführungsumgebung U außerhalb der sicheren Ausführungsumgebung TEE liegt,
- Schritt S4: Senden des öffentlichen Schlüssels K_pub und Senden von ersten verschlüsselten Daten D" an einen obfuszierten Programmcode O, wobei der obfuszierte Programmcode O von der unsicheren Ausführungsumgebung U aufgewiesen wird,
- Schritt S5: Verifizieren des öffentlichen Schlüssels P_pub durch den obfuszierten Programmcode Ound in Abhängigkeit von Ergebnissen des Verifizierens ein Umschlüsseln der ersten verschlüsselten Daten D" in zweite verschlüsselte Daten D', wobei die zweiten verschlüsselten Daten D' mit dem öffentlichen Schlüssel K_pub verschlüsselt sind,
- Schritt S6: Senden der zweiten verschlüsselten Daten D' an die Einklave E in der sicheren Ausführungsumgebung TEE und
- Schritt S7: Entschlüsseln der zweiten verschlüsselten Daten D' in die zu schützenden Daten D.

Das Datenverarbeitungssystem F zur Ausführung eines Verfahrens nach Fig. 1 weist die folgenden Komponenten auf:
- eine sichere Ausführungsumgebung TEE, wobei die sichere Ausführungsumgebung TEE ausgebildet ist:
   - einen Enklavencode C auszuführen wodurch ein Schlüsselpaar K_pub/K_priv generiert wird, wobei das Schlüsselpaar K_pub/K_priv einen öffentlichen Schlüssel K_pub und einen privaten Schlüssel K_priv aufweist,
   - den öffentlichen Schlüssel K_pub zu senden,
- eine unsichere Arbeitsumgebung U, wobei die unsichere Ausführungsumgebung U außerhalb der sicheren Ausführungsumgebung TEE liegt, wobei die unsichere Arbeitsumgebung U ausgebildet ist, den öffentlichen Schlüssel K_pub zu empfangen,
- einen obfuszierten Programmcode O, wobei sich der obfuszierte Programmcode Oinnerhalb der unsicheren Ausführungsumgebung U befindet,
wobei die unsichere Ausführungsumgebung U ausgebildet ist, den öffentlichen Schlüssel K_pub und erste verschlüsselten Daten D" an den obfuszierten Programmcode Ozu senden, wobei der obfuszierte Programmcode Oausgebildet ist, ein Verifizieren des öffentlichen Schlüssels K_pub durchzuführen und in Abhängigkeit von Ergebnissen des Verifizierens ein Umschlüsseln der ersten verschlüsselten Daten D" in zweite verschlüsselte Daten D' durchzuführen, wobei die zweiten verschlüsselten Daten D' mit dem öffentlichen Schlüssel K_pub verschlüsselt sind, wobei der obfuszierte Programmcode Oaußerdem ausgebildet ist, die zweiten verschlüsselten Daten D' zu senden, und
wobei die sichere Ausführungsumgebung TEE ausgebildet ist durch die Enklave E die zweiten verschlüsselten Daten D' zu empfangen und die zweiten verschlüsselten Daten D' zu entschlüsseln.

Das Ausführen des Enklavencodes C wird in einer Enklave E durchgeführt, wobei die Enklave E von der sicheren Ausführungsumgebung TEE aufgewiesen wird

Im Folgenden ist ein konkretes Ausführungsbeispiel der Erfindung beschrieben. Eine wichtige Teilfunktion in einer Software, die vom Hersteller öffentlich zum Kauf angeboten wird, wird durch ein neuronales Netz berechnet. In den vom Netz gelernten Gewichten steckt zu schützendes Knowhow des Herstellers, daher sollen diese nicht bekannt werden. Aber natürlich soll die Software auf den Geräten der Käufer korrekt ablaufen, daher muss dort das neuronale Netz zusammen mit dem Input für die Funktion in irgendeiner Form ausgewertet werden können.

Bislang macht Software keinerlei Gebrauch von einer Trusted Execution Environment bzw. sicheren Ausführungsumgebeung TEE, der gesamte Code läuft also in einer unsicheren Ausführungsumgebung U. Somit ist es für einen Angreifer bzw. potenziellen Wettbewerber kein Problem, die Software für die Ausführung auf einem eigenen Gerät zu erwerben und dort deren Ablauf, inklusive der Auswertung des neuronalen Netzes, zu analysieren. Dieses Problem kann mit dem Verfahren aus der Erfindung gelöst werden, sofern auf den Geräten der Käufer eine TEE gemäß der mit der Erfindung beschriebenen Voraussetzungen vorhanden ist.

Die Gewichte des neuronalen Netzes entsprechen den zu schützenden Daten D. Sie werden im Rahmen des Softwareentwicklungsprozesses mit einem symmetrischen Schlüssel in die ersten verschlüsselten Daten D" vorverschlüsselt und obfuszierter Programmcode O erstellt. Beides, die ersten verschlüsselten Daten D" und der obfuszierte Programmcode O, werden auf dem Datenverarbeitungssystem F gespeichert.

Der Enklavencode C wird so implementiert, dass er nach der Entschlüsselung der zweiten verschlüsselten Daten D' in die zu schützenden Daten D (d.h. der Gewichte des neuronalen Netzes) die Auswertung des neuronalen Netzes für beliebige aus der unsicheren Ausführungsumgebung U empfangene Inputs durchführen und das Ergebnis wieder an die unsichere Ausführungsumgebung U in die sicher Ausführungsumgebung TEE zurückliefern kann.

Der Teil der Software, der bislang die Auswertung des neuronalen Netzes für einen bestimmten Input vorgenommen hat, wird ersetzt durch einen, der den Input an den Enklavencode C weiterleitet und das Ergebnis von dort wieder entgegennimmt.

Die gesamte Software, inklusive des obfuszierten Progranmmcodes O, des Enklavencodes C und der ersten verschlüsselten Daten D", kann wie bisher in einem Zug an die Kunden ausgeliefert werden, z.B. per Installationsdatenträger oder Download.

Die Gewichte D des neuronalen Netzes liegen in der unsicheren Ausführungsumgebung U in der verschlüsselten Form D" vor, während die entschlüsselten Gewichte nur innerhalb des Enklavencodes C vorliegen, welche dort aber für niemanden - auch nicht den Anwender - zugreifbar sind.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Bereitstellung von zu schützenden Daten (D) in einer sicheren Ausführungsumgebung (TEE) eines Datenverarbeitungssystems (F),
mit den Schritten:
- Ausführen (S1) eines Enklavencodes (C) in der sicheren Ausführungsumgebung (TEE),
- Generieren (S2) eines Schlüsselpaars (K_pub/K_priv) durch den Enklavencode (C), wobei das Schlüsselpaar (K_pub/K_priv) einen öffentlichen Schlüssel (K_pub) und einen privaten Schlüssel (K_priv) aufweist,
- Senden (S3) des öffentlichen Schlüssels (K_pub) an eine unsichere Ausführungsumgebung (U) des Datenverarbeitungssystems (F), wobei die unsichere Ausführungsumgebung (U) außerhalb der sicheren Ausführungsumgebung (TEE) liegt,
- Senden (S4) des öffentlichen Schlüssels (K_pub) und Senden von ersten verschlüsselten Daten (D") an einen obfuszierten Programmcode (O), wobei der obfuszierte Programmcode (O) von der unsicheren Ausführungsumgebung (U) aufgewiesen wird,
- Verifizieren (S5) des öffentlichen Schlüssels (P_pub) durch den obfuszierten Programmcode (O) und in Abhängigkeit von Ergebnissen des Verifizierens ein Umschlüsseln der ersten verschlüsselten Daten (D") in zweite verschlüsselte Daten (D'), wobei die zweiten verschlüsselten Daten (D') mit dem öffentlichen Schlüssel (K_pub) verschlüsselt sind,
- Senden (S6) der zweiten verschlüsselten Daten (D') an die Enklave (E) in der sicheren Ausführungsumgebung (TEE) und
- Entschlüsseln (S7) der zweiten verschlüsselten Daten (D') in die zu schützenden Daten (D).

2. Verfahren nach Anspruch 1,
wobei das Datenverarbeitungssystem (F) ausgebildet ist als:
- Server,
- Cloudserver,
- Fremdsystem,
- Computer und/oder
- mobiles informationsverarbeitendes Gerät.

3. Verfahren nach einem der vorhergehenden Ansprüche,
wobei eine Zugriffsbeschränkung auf die sichere Ausführungsumgebung (TEE) vorhanden ist, welche der unsicheren Ausführungsumgebung (U) den Zugriff auf die sichere Ausführungsumgebung (TEE) verweigert.

4. Verfahren nach einem der vorhergehenden Ansprüche,
wobei der Enklavencode (C) ausgebildet ist Zufallszahlen zu erzeugen, wobei mindestens eine der Zufallszahlen zur Generierung des Schlüsselpaares (K_pub/K_priv) herangezogen wird.

5. Verfahren nach einem der vorhergehenden Ansprüche,
wobei die zweiten verschlüsselten Daten (D') mittels eines rein asymmetrischen oder hybriden Verschlüsselungsverfahren verschlüsselt sind.

6. Verfahren nach einem der vorhergehenden Ansprüche,
wobei die ersten verschlüsselten Daten (D") auf dem Datenverarbeitungssystem (F) in der unsicheren Arbeitsumgebung (U) gespeichert sind.

7. Verfahren nach einem der vorhergehenden Ansprüche,
wobei das Schlüsselpaar (K_pub/K_priv) als asymmetrisches Schlüsselpaar ausgebildet ist.

8. Verfahren nach einem der vorhergehenden Ansprüche,
wobei bei dem Umschlüsseln der ersten verschlüsselten Daten (D") zu zweiten verschlüsselten Daten (D') obfuszierte Zwischenergebnisse erstellt werden.

9. Verfahren nach einem der vorhergehenden Ansprüche,
wobei bei dem Verifizieren des öffentlichen Schlüssels (K_pub) durch den obfuszierten Programmcode (O) geprüft wird, ob eine gültige Attestierung des öffentlichen Schlüssels (K_pub) vorliegt und wobei das Umschlüsseln der ersten verschlüsselten Daten (D") in die zweiten verschlüsselten Daten (D') nur bei Vorliegen einer gültigen Attestierung durchgeführt wird.

10. Verfahren nach einem der vorhergehenden Ansprüche,
wobei der obfuszierte Code (O) auf dem Datenverarbeitungssystem (F) in der unsicheren Arbeitsumgebung gespeichert ist.

11. Verfahren nach einem der vorhergehenden Ansprüche,
wobei die zu schützenden Daten (D) als:
- Programmcode,
- interpretierbarer Code,
- Parametrisierungen für Algorithmen,
- numerische Daten und/oder
- Gewichte eines neuronalen Netzes,
ausgebildet sind.

12. Verfahren nach einem der vorhergehenden Ansprüche,
wobei das Ausführen des Enklavencodes (C) in einer Enklave (E) durchgeführt wird, wobei die Enklave (E) von der sicheren Ausführungsumgebung (TEE) aufgewiesen wird.

13. Datenverarbeitungssystem (F) zur Ausführung eines Verfahrens nach einem der vorherigen Ansprüche, das Datenverarbeitungssystem (F) aufweisend:
- eine sichere Ausführungsumgebung (TEE), wobei die sichere Ausführungsumgebung (TEE) ausgebildet ist:
- einen Enklavencode (C) auszuführen wodurch ein Schlüsselpaar (K_pub/K_priv) generiert wird, wobei das Schlüsselpaar (K_pub/K_priv) einen öffentlichen Schlüssel (K_pub) und einen privaten Schlüssel (K_priv) aufweist,
- den öffentlichen Schlüssel (K_pub) zu senden,
- eine unsichere Arbeitsumgebung (U), wobei die unsichere Ausführungsumgebung (U) außerhalb der sicheren Ausführungsumgebung (TEE) liegt, wobei die unsichere Arbeitsumgebung (U) ausgebildet ist, den öffentlichen Schlüssel (K_pub) zu empfangen,
- einen obfuszierten Programmcode (O), wobei sich der obfuszierte Programmcode (O) innerhalb der unsicheren Ausführungsumgebung (U) befindet,
wobei die unsichere Ausführungsumgebung (U) ausgebildet ist, den öffentlichen Schlüssel (K_pub) und erste verschlüsselten Daten (D") an den obfuszierten Programmcode (O) zu senden, wobei der obfuszierte Programmcode (O) ausgebildet ist, ein Verifizieren des öffentlichen Schlüssels (K_pub) durchzuführen und in Abhängigkeit von Ergebnissen des Verifizierens ein Umschlüsseln der ersten verschlüsselten Daten (D") in zweite verschlüsselte Daten (D') durchzuführen, wobei die zweiten verschlüsselten Daten (D') mit dem öffentlichen Schlüssel (K_pub) verschlüsselt sind, wobei der obfuszierte Programmcode (O) außerdem ausgebildet ist, die zweiten verschlüsselten Daten (D') zu senden, und
wobei die sichere Ausführungsumgebung (TEE) ausgebildet ist die zweiten verschlüsselten Daten (D') zu empfangen und die zweiten verschlüsselten Daten (D') zu entschlüsseln.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
